Europäisches Patentamt

European Patent Office

Office européen des brevets

(11) Veröffentlichungsnummer: **0 302 317**
**A1**

## (12) EUROPÄISCHE PATENTANMELDUNG

(21) Anmeldenummer: 88111788.1

(22) Anmeldetag: 21.07.88

(51) Int. Cl.⁴: **F16C 32/06 , F16C 33/10**

(30) Priorität: 03.08.87 DE 3725675

(43) Veröffentlichungstag der Anmeldung:
08.02.89 Patentblatt 89/06

(84) Benannte Vertragsstaaten:
**AT BE CH DE ES FR GB GR IT LI LU NL SE**

(71) Anmelder: **INTERATOM Gesellschaft mit
beschränkter Haftung
Friedrich-Ebert-Strasse
D-5060 Bergisch-Gladbach 1(DE)**

(72) Erfinder: **Pütz, Heinrich, Dipl.-Ing.
Wellerscheid 2
D-5203 Much(DE)**

(74) Vertreter: **Mehl, Ernst, Dipl.-Ing. et al
Postfach 22 13 17
D-8000 München 22(DE)**

(54) **Gasstatisches und -dynamisches Lager.**

(57) Insbesondere für die Verwendung in Turboladern wird ein kombiniertes gasstatisches und -dynamisches Lager vorgeschlagen, bei dem der gasstatische Teil aus einem auf der Welle (2) angebrachten Lagerkörper (4) aus einem porösen Sintermetall besteht, während die diesen Körper axial übergreifende Lagerschale (5) aus mehreren Segmenten besteht, die einander teilweise überlappen und durch Federelemente (7) auseinandergespreizt werden, so daß sie mit ihrer einen Kante an der Welle (2) anliegen. Das (unter Umständen vom Verdichter abgezweigte) Lagergas versorgt zunächst ein ebenfalls gasstatisches Axiallager (10) und treibt dann eine Hilfsturbine (11) an, durch die der Welle auch bei unbeaufschlagter Turbine (1) eine Mindestdrehzahl mitgeteilt wird. Mit dem Lagergas können auch Sperrgasdichtungen (14) betrieben werden.

FIG 1

FIG 2

EP 0 302 317 A1

## Gasstatisches und -dynamisches Lager

Die vorliegende Erfindung betrifft ein Lager nach dem Oberbegriff des 1. Anspruchs. In ihrer DE-C-32 30 232 hat die Anmelderin eine Lagerschale für ein gasstatisches Lager und ein Verfahren zu seiner Herstellung beschrieben, wobei die Lagerschale aus einem porösen (z. B. Sinter-) Material besteht und auf ihrer Innenseite stärker verdichtet ist, so daß die Drosselfunktion der Lagerschale nur noch von dieser Oberflächenschicht übernommen wird. Derartige Lager können bereits mit verhältnismäßig geringen Gasdrücken betrieben werden, wie sie z. B. von den zur Leistungssteigerung von Verbrennungskraftmaschinen verwendeten Turboladern aufgebracht werden. Wegen dieses und auch wegen anderer Vorteile hat die Anmelderin in ihrer EP-A-0 212 091 die Verwendung derartiger Lager in Turboladern vorgeschlagen. Bei dieser und bei anderen Anwendungen, wo die Lager über einen weiten Temperaturbereich hin betrieben werden sollen, hat sich gezeigt, daß die temperaturbedingten Änderungen der Abmessungen der notwendigerweise aus verschiedenen Werkstoffen hergestellten Lagerschalen und Wellen zu Änderungen in der Spaltbreite führen, wodurch die Eigenschaften der Lager unter Umständen ungünstig beeinflußt wurden. Das derartigen Lagern eigene grundsätzlich instabile Verhalten wurde bisher nicht beseitigt, sondern nur (z. B. durch eine geeignete Dämpfung) auf eine solche Drehzahl verschoben, die außerhalb der betriebsüblichen Drehzahlbereiche liegt. Es ist bekannt, derartige Instabilitäten durch eine Aufteilung der Lagerschale in mehrere, zueinander und zur Welle bewegliche Segmente zu verhindern. Die Anwendung dieser Bauart auf gasstatische Lager bereitet jedoch Schwierigkeiten.

Aufgabe der vorliegenden Erfindung ist ein Gaslager, das auch bei stark wechselnden Temperaturen betrieben werden kann und das ein stabiles Laufverhalten aufweist. Ferner sind Aufgabe dieser Erfindung Ausgestaltungen desselben, durch die seine Eignung für den Einsatz in Turboladern verbessert wird.

Die Lösung der Hauptaufgabe erfolgt durch die im kennzeichnenden Teil des 1. Anspruchs angegebenen Mittel. Dadurch, daß nicht mehr die Lagerschale, sondern die Welle den porösen, von innen mit Gasdruck beaufschlagten Körper enthält, wird nicht nur dessen Fertigung erleichtert (die Bearbeitung einer Außenoberfläche läßt sich, insbesondere für kleine Durchmesser einfacher durchführen als diejenige einer Innenoberfläche), sondern die Lagerschale läßt sich dann auch ohne weiteres in einzelne Segmente aufteilen. Da der aus einem porösen Material hergestellte Teil der Welle nur einen Teilabschnitt der Lagerlänge ausmacht, wirkt der übrige Teil als gasdynamisches Lager, was die Stabilitätseigenschaften der Lagerung weiter verbessert. Die Zufuhr des Lagergases durch die Welle selbst sorgt zudem für eine bessere Kühlung derselben und löst damit ein weiteres, beim Betrieb von Turboladern auftretendes Problem. Da die Segmente der Lagerschale durch Federkraft beaufschlagt werden, können sie den durch die Temperaturdehnung auftretenden Zwängungen ohne weiteres nachgeben und für einen bei allen Temperaturen gleich breiten Lagerspalt sorgen.

Die Ausgestaltung gemäß dem 2. Anspruch sorgt, wie weiter unten anhand der Zeichnungsbeschreibung näher ausgeführt, für eine konstruktive Vereinfachung der gesamten Lagerung, indem kein separates Axiallager vorgesehen werden muß.

Der 3. Anspruch definiert eine besondere Ausführung dieses Lösungsgedankens.

Die weitere Ausgestaltung der Erfindung gemäß dem 4. Anspruch verleiht der sich im Lager drehenden Welle eine Art Hilfsantrieb, durch die eine Mindestdrehzahl aufrechterhalten wird, auch wenn der eigentlichen, im Lager ruhenden Maschine keine Energie zugeführt wird. Bei der Anwendung dieses Vorschlages auf Turbolader für Verbrennungskraftmaschinen ergibt sich ein verbessertes Ansprechverhalten, da der Lader nicht jeweils aus dem Stand bzw. einer sehr niedrigen Drehzahl heraus beschleunigt werden muß.

Durch die Ausgestaltung gemäß dem 5. Anspruch können die Lagerschalensegmente leichter den relativen Dimensionsänderungen zwischen ihnen und der Welle folgen; zugleich wird der dynamische Anteil der Lagertragkraft erhöht.

Ein Ausführungsbeispiel der Erfindung ist in der Zeichnung dargestellt, und zwar in Form eines Turboladers (ohne Gehäuse dargestellt). Im einzelnen zeigt

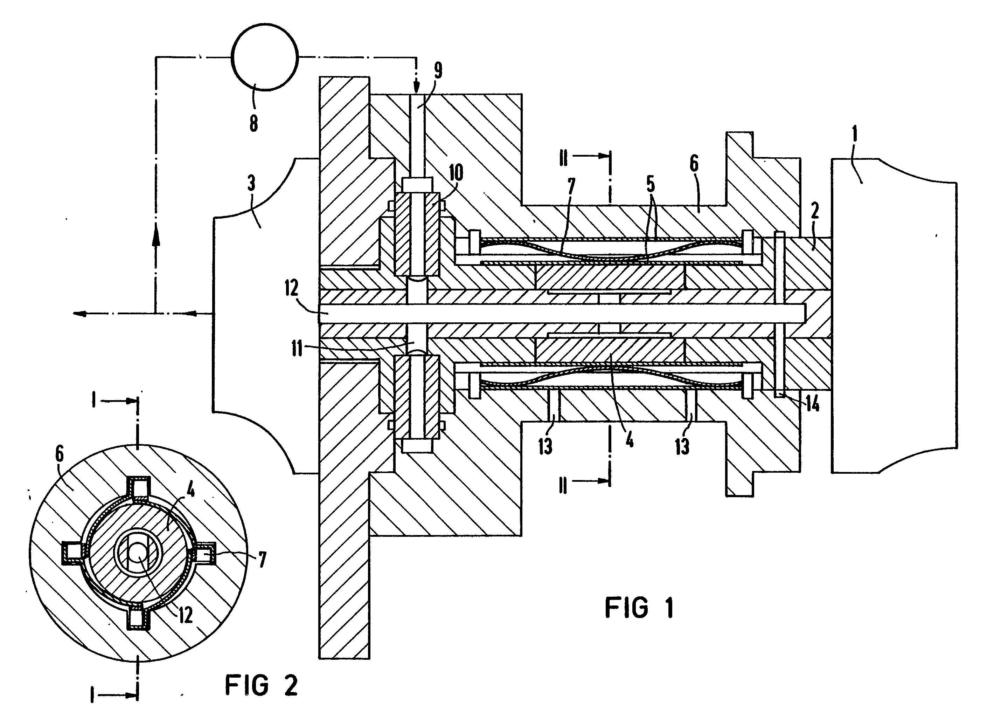

Figur 1 einen Längsaxialschnitt entsprechend der Linie I-I der Figur 2 und die

Figur 2 einen Querschnitt entsprechend der Linie II-II der Figur 1.

Eine durch die Abgase einer hier nicht dargestellten Verbrennungskraftmaschine angetriebene Turbine 1 treibt über eine Welle 2 einen Verdichter 3 für die der Verbrennungskraftmaschine zuzuführende Ladeluft. Auf einem Teil ihrer Länge weist die Welle 2 eine Buchse 4 aus einem porösen Sintermetall auf, die an ihrer Außenoberfläche verdichtet ist, so daß diese als Drossel für das Lagergas, z. B. Luft, wirkt. Im Zusammenwirken mit einer Lagerschale 5 wird eine gasstatische Lagerung gebildet. Die Lagerschale 5 besteht aus mehreren (hier vier) einzelnen Segmenten aus abgekanteten Blechstreifen, die an ihrer einen Längskante am porösen Lagerkörper 4 anliegen und an ihrer anderen Längskante in Vertiefungen fassen, die in einem Lagergehäuse 6 vorgesehen sind. Die einzelnen Segmente der Lagerschale 5 überlappen einander und werden in diesem Bereich durch Federelemente 7 auseinandergespreizt. Die Lagerschale 5 erstreckt sich nach beiden Seiten über Bereiche der Welle 2, in denen diese keinen porösen Lagerkörper 4 aufweist; in diesen Bereichen wirkt das Lager gasdynamisch. Das zum Betrieb des Lagers erforderliche Fluid kann einer beliebigen Druckgasquelle entnommen werden; es kann jedoch (- schematisch angedeutet) von der vom Verdichter 3 komprimierten Ladeluft abgezweigt und in einem Druckbehälter 8 zwischengespeichert radialen Zuleitungen 9 im Gehäuse 6 zugeführt werden. Über die Bohrungen 9 wird auch ein weiterer poröser Sinterkörper 10 der beschriebenen Art versorgt (und zugleich gekühlt), der Teil eines gasstatischen Axiallagers ist. Das Lagergas aus den Zuleitungen 9 beaufschlagt dann eine auf der Welle 2 montierte Hilfsturbine 11, durch die erstere ständig mit einer Mindestdrehzahl umläuft. Das Lagergas wird dann über eine in der Welle 2 angebrachte zentrale Zuleitung 12 dem Lagerkörper 4 zugeführt, von wo es über Entlüftungsbohrungen 13 entweicht. Mit einem Teilstrom können auch Sperrgasdichtungen 14 betrieben werden.

## Ansprüche

1. Gasstatisches und -dynamisches Radiallager, **gekennzeichnet durch** folgende Merkmale:

a) ein einen Abschnitt der Lagerlänge einnehmendes Teil der Welle (2) aus einem porösen Sinterkörper (4),

b) eine im Inneren der Welle (2) geführte Zuleitung (12) für das Lagergas,

c) eine in einzelne, einander teilweise überlappende Segmente aufgeteilte Lagerschale (5), die durch im Bereich der Überlappungen zwischen ihnen angeordnete Federelemente (7) gespreizt werden.

2. Lager nach Anspruch 1, **gekennzeichnet durch** die Kombination mit einem gasstatischen Axiallager (10).

3. Lager nach Anspruch 2, **dadurch gekennzeichnet**, daß die Lagergaszuleitung (9) für das Axiallager in die in der Welle (2) geführte Lagergaszuleitung (12) des Radiallagers (4) mündet.

4. Lager nach Anspruch 3, **gekennzeichnet durch** eine der Einmündung in die Lagergaszuleitung (12) in der Welle (2) vorgeschaltete, auf derselben befestigte Hilfsturbine (11).

5. Lager nach Anspruch 1, **dadurch gekennzeichnet**, daß die Segmente der Lagerschale (5) mit ihrer einen Längskante federnd an der Welle (2) anliegen.

FIG 1

FIG 2

EP 0 302 317 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 118 366 (GENERAL MOTORS CO.) <br> * Figuren; Seite 1, Zeilen 51-57,62-69; Seite 2, Zeilen 54-77 * <br> --- | 1 | F 16 C 32/06 <br> F 16 C 33/10 |
| A | US-A-4 348 066 (AGRAWAL et al.) <br> * Insgesamt * <br> --- | 1,5 | |
| A | DE-B-2 349 072 (SKF) <br> --- | | |
| A | US-A-4 355 850 (OKANO) <br> ----- | | |

RECHERCHIERTE SACHGEBIETE (Int. Cl.4)

F 16 C
F 01 D

Der vorliegende Recherchenbericht wurde für alle Patentansprüche erstellt

| Recherchenort | Abschlußdatum der Recherche | Prüfer |
|---|---|---|
| DEN HAAG | 09-11-1988 | GUTHMULLER J.A.H. |